# EUROPÄISCHE PATENTANMELDUNG

(11) **EP 0 921 708 A1**
(43) Veröffentlichungstag der Anmeldung: **09.06.1999**
(21) Anmeldenummer: 97120297.3
(22) Anmeldetag: 19.11.1997
(51) Int. Cl.: H05B 6/06

(54) **Induktionskochgerät für ein Kochgefäss aus ferromagnetischem Material**

(71) Anmelder: Therma Grossküchen Produktion AG, 6210 Sursee (CH)
(72) Erfinder: Gähler, Max, Centralstrasse 43, 6210 Sursee (CH)
(74) Vertreter: Herrmann-Trentepohl, Werner, Dipl.-Ing.

(57) **Zusammenfassung**

Ein Induktionskochgerät für ein Kochgefäß (2) aus ferromagnetischem Material, mit einer Induktionsheizung zum Erhitzen des Kochgefässes (2) und eines im Kochgefäß (2) befindlichen Gargutes, weist eine Sensoreinrichtung (6) zur Ermittlung der Temperatur im Kochgefäß und/oder Gargut und eine an die Sensoreinrichtung (86) und die Induktionsheizung angeschlossene Steuer- und Regelschaltung zur Leistungssteuerung und/oder Temperaturreglung bei einem Kochvorgang auf.

## Beschreibung

Die Erfindung betrifft ein Kochgerät für ein Kochgefäß aus ferromagnetischem Material, mit einer Induktionsheizung zum Erhitzen des Kochgefässes und eines im Kochgefäß befindlichen Gargutes.

In neuerer Zeit ersetzt oder ergänzt - insbesondere auch im Großküchenbereich - das Kochen mit Induktionsgeräten vermehrt konventionelle elektrische oder gasbetriebene Herde. Bei Induktionskochgeräten dienen als Heizeinrichtung Induktionsspulen, die von einem Elektrogenerator versorgt werden. Ein elektromagnetisches Wechselfeld erhitzt das ferromagnetische Material des Kochgeschirrs. Das Induktionsfeld kann schnellstens abgeschaltet und in seiner Intensität geregelt werden.

Bekannt sind Induktionskochgeräte, welche als Tisch- oder Einzelgerät ausgebildet sind, dessen Gehäuse den Elektrogenerator für die Induktionsspule bzw. die Induktionsspulen aufnimmt. Ein Glaskeramikfeld zum Aufsetzen des Kochgefässes schützt die Induktionsspulen vor Beschädigung.

In neuerer Zeit haben sich vermehrt Induktions-Rechauds durchgesetzt, welche als Auftischherde mit einer oder mehreren Kochstellen ausgebildet sind. Sie dienen als Zusatzgeräte zu grösseren Herden und eignen sich zum Kochen, Braten, Dünsten, Wärmen und Garen verschiedenster Gerichte. Bei bisherigen Auftischgeräten war die Verwendung zum Fritieren von beispielsweise Pommes frites, Fisch, Paniertem usw. in kleinen Portionen nicht möglich, da eine Temperaturregelung des Kochgutes nicht vorhanden ist. Die Geräte werden vorzugsweise transportabel ausgelegt und können im Haushalt einfach an die Steckdosen angeschlossen werden.

Das Kochen mit einem Induktionskochgerät bringt insbesondere folgende Vorteile mit sich:
- hohe Leistung,
- schneller Einsatz, da sofort die gesamte Heizleistung im Boden des Kochgefässes anliegt, weil die Kochplatte nicht angeheizt werden muß,
- sofortige und präzise Leistungsregelung über einen großen Variationsbereich mittels Betätigung eines (Dreh-)Schalters oder anderen Eingabevorrichtungen, wie z. B. Druckknöpfe
- niedriger Energieverbrauch,
- hoher Wirkungsgrad,
- niedrige Betriebskosten,
- leichte Reinigung der Glaskeramikplatte, welche beim Kochen nur wenig erhitzt wird,
- niedrige Anbrenngefahr, und
- geringe Stand-by-Verluste, während das eingeschaltete Kochfeld nicht besetzt ist.

Bei bisherigen Geräten fand die Leistungsregelung in der Art statt, daß eine konstante einstellbare Leistung, welche in das Kochgut übergeht, eingestellt wurde. Diese konstant einstellbare Leistung hatte zur Folge, daß, wenn ein Überkochen, Anbrennen oder Nicht-Kochen verhindert werden sollte, der Bediener ständig das Auftischgerät beaufsichtigen und dieses in der Leistung nachregeln mußte.

Die Auftischgeräte haben sich an sich bewährt, allerdings besteht der Wunsch nach einer weiteren Verbesserung und Verfeinerung der Kochüberwachung, insbesondere beim Gebrauch als Friteuse oder Pasta Cooker. Die Erfindung zielt darauf ab, dieses Problem zu lösen.

Die Erfindung erreicht dieses Ziel durch den Gegenstand des Anspruches 1. Die Erfindung schafft ein Induktionskochgerät für ein Kochgefäß aus ferromagnetischem Material, mit einer Induktionsheizung zum Erhitzen des Kochgefässes und eines im Kochgefäß befindlichen Gargutes, mit einer Sensoreinrichtung zur Ermittlung der Temperatur im Kochgefäß und/oder Gargut, und mit einer an die Sensoreinrichtung und die Induktionsheizung angeschlossenen Steuer- und Regelschaltung zur Leistungssteuerung und/oder Temperaturreglung zusammen mit der Sensoreinrichtung bei einem Kochvorgang.

Das derart ausgelegte Induktionskochgerät ermöglicht eine einfache und wirksame Kontrolle des Kochvorganges, wobei neben der bisher bereits üblichen Leistungsvorgabe auf einfache Weise auch die wichtige Temperaturvorgabe realisierbar wird. Damit ist es möglich, z.B. beim Fritieren eine Temperatur vorzugeben, welche beim Garvorgang genau eingehalten wird, so daß der Koch- bzw. Garvorgang in bisher nicht gekannter Weise auch beim Induktionsherd regelbar wird.

Vorteilhaft ist eine Ausgestaltung des Induktionskochgerätes als Grundgeräteteil mit der Induktionsheizung und mit einem auf das Grundgeräteteil setzbaren Aufsatzteil mit einer an die Abmessungen des Kochgefässes angepaßten Ausnehmung zum Einsetzen des Kochgefäßes. Damit ist es unproblematisch möglich, die Temperaturregelung als Zusatzgerät zu bestehenden Kochgeräten auszugestalten.

Nach einer weiteren besonders bevorzugten Ausbildung der Erfindung wird die Sensoreinrichtung als Sonde ausgebildet. Zweckmäßig umfaßt die Sonde dabei ein Fühlerrohr mit einem im Fühlerrohr angeordneten Widerstandsthermometer und eine auf das Fühlerrohr aufgesetzte Spitze, wobei die Wärmeleitung zwischen Spitze und Widerstandsthermometer durch zwischen der Spitze und dem Widerstandsthermometer angeordnetes, wärmeisolierendes Material reduziert ist. Hiermit wird ein unkompliziertes und robustes Sensorelement geschaffen, welches dennoch eine präzise Überwachung des Kochvorganges erlaubt. Eine Messung der Temperatur findet nicht am unmittelbar vorderen Ende der Spitze statt, da diese am Kochtopf anliegt und deshalb eine Temperaturverfälschung mit Bezug auf das Kochgut ergeben würde. Vielmehr wird die Messung der Temperatur oberhalb dieser Spitzenendflächen durchgeführt.

Nach einer weiteren, ergänzenden Variante ist ferner ein Sondenhalter zum Befestigen der Sonde am Kochgefäß und ein an die Sonde angeschlossenes Kabel vorgesehen. Zweckmäßig umfaßt der Sondenhalter dabei eine Klemmeinrichtung zum Anklemmen am Kochgefäßrand und einen Hülsenabschnitt zum Einsetzen der Meßsonde, welcher derart ausgelegt ist, daß die Spitze bis an den Boden des Kochgefässes führbar ist, wobei die eingeschobene Meßsonde ringsum gegenüber der Kochgefäßwandung berührungsfrei bleibt. Das Anbringen des Meßsonde wird erleichtert, da lediglich ein Festklemmen der Meßsonde - ähnlich zum Festklemmen eines Stiftes mit Klemmeinrichtung - am Kochgefäß- bzw. Topfrand notwendig ist. Zur Durchführung eines Garvorganges mit Temperaturvorgabe ist dann lediglich noch eine an die Steuer- und Regelschaltung angeschlossene und zwischen zwei Bedienzuständen umschaltbare Bedienungseinheit mit einer doppelten Skaleneinteilung zur Temperaturvorgabe bei eingesteckter Sonde oder zur Leistungsvorgabe bei ausgesteckter Sonde zu betätigen. Demzufolge gibt es zwei Betriebszustände für das erfindungsgemäße Induktionskochgerät, welche sich dadurch unterscheiden, daß die Sonde entweder eingesteckt oder nicht eingesteckt ist. Im ersteren Fall findet eine Temperaturregelung im Kochgut mittels der eingesteckten Sonde statt, wobei mittels einer Skaleneinteilung der Bedienungseinheit eine Temperaturvorgabe durchgeführt wird. Im zweiten Fall findet eine Leistungssteuerung entsprechend der eingestellten Stufe statt, wodurch eine konstante Energiezufuhr an das Kochgut abgegeben wird. In diesem Fall könnte die Skala zur Leistungssteuerung beispielsweise von 0,1 bis 10 verlaufen. Ein Umschalten zwischen dem einen und dem anderen Betriebszustand findet bei Einstecken der Sonde statt.

Vorzugsweise werden mit der Steuer- un/oder Regelschaltung folgende Sicherheitsfunktionen als Schaltungsteil oder Unterroutine realisiert: Sondenerkennung, Defekterkennung und/oder Kochguterkennung. Diese Funktionen sorgen jederzeit für eine sichere Beherrschung des Garvorganges. Gefahrensituationen werden zuverlässig vermieden. Die Sondenerkennung dient dazu, festzustellen, ob überhaupt eine Temperaturregelung möglich ist oder ob nur die (jeweils konstante) Leistungsvorgabe benutzt werden kann. Analoges gilt für die Erkennung eines Sondendefektes (z.B. Unterbrechung oder Kurzschluß). Bei einem Sondendefekt kann nach einem Abschalten das Garen mit der Leistungssteuerung fortgesetzt werden.

Zur Kochguterkennung nutzt die Erfindung folgenden Effekt: Anhand des eingestellten Betriebszustandes wird dem Kochgefäß eine entsprechende Leistung zugeführt. Ist ein Kochgut vorhanden, steigt die Temperatur an der Sonde kontinuierlich an. Ist dagegen kein Kochgut vorhanden, registriert die Sonde keinen Temperaturanstieg. Gemessen wird also die Größe des Temeraturanstieges. Das Gerät schaltet bei Fehlen eines Temperaturgradienten ab. Der Betrieb kann nach einem Abschalten fortgesetzt werden.

Weitere vorteilhafte Ausgestaltungen der Erfindung sind den übrigen Unteransprüchen zu entnehmen.

Nachfolgend wird die Erfindung anhand eines Ausführungsbeispieles unter Bezug auf die Zeichnung näher beschrieben. Es zeigt:
- Fig. 1: eine perspektivische Ansicht eines erfindungsgemäßen Induktionskochgerätes;
- Fig. 2: einen Schnitt durch einen Abschnitt einer Meßsonde;
- Fig. 3: einen weiteren Schnitt durch einen Abschnitt einer Meßsonde; und
- Fig. 4: eine Ansicht der Meßsonde nebst Halterung.

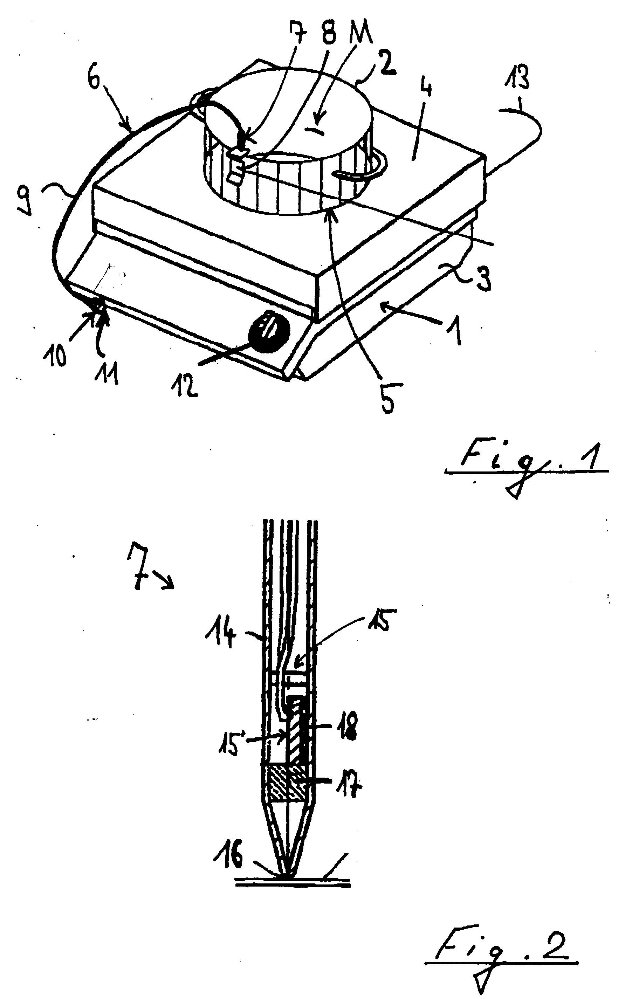

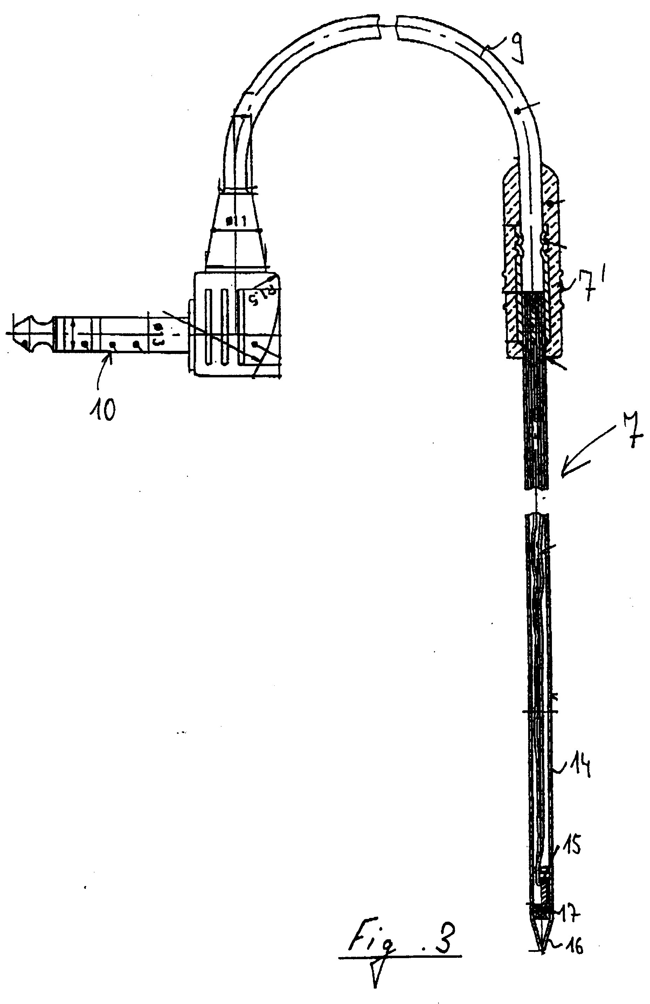

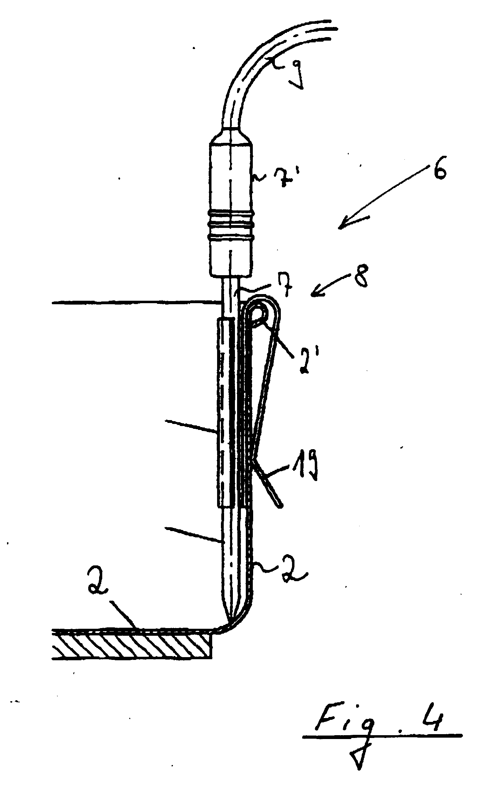

Fig. 1 zeigt ein Induktionskochgerät 1 mit einer fugenlos in ein Chromnickelstahl-Gehäuse eingelassenen Glaskeramikplatte (nicht dargestellt) für ein Kochgefäß bzw- einen Kochtopf 2 aus ferromagnetischem Material mit einer Markierung M zur Anzeige der minimal zulässigen Füllhöhe. Eine (ebenfalls nicht dargestellte) Induktionsheizung dient in an sich bekannter Weise zum Erhitzen des Kochgefässes 2 und eines im Kochgefäß befindlichen Gargutes. Ein optionaler Einsatzkorb (nicht dargestellt) verwandelt das Kochgefäß in eine Friteuse.

Das Induktionskochgerät 1 umfaßt ein Grundgeräteteil 3 (Tischgerät) mit der Induktionsheizung und ein auf das Grundgeräteteil 3 aufgesetztes Aufsatzteil 4 mit einer an die Abmessungen des Kochgefässes angepaßten Ausnehmung 5 zum Einsetzen des Kochgefässes 2, was für einen sicheren Halt des Kochgefässes 2 beim Fritieren sorgt. Eine Sensoreinrichtung 6 ermöglicht in Verbindung mit einer an die Induktionsheizung angeschlossenen Steuer- und Regelschaltung (nicht dargestellt) eine Leistungssteuerung und/oder eine Temperaturreglung bei einem Kochvorgang.

Nach Fig. 1 umfaßt die Sensoreinrichtung 6 eine Sonde 7 und einen Halter 8. Die Sonde 7 ist über ein Kabel 9 mit Klinkenstecker 10 an eine Buchse 11 des Grundgeräteteiles 3 angeschlossen. Ein Drehschalter 12 mit doppelter Skaleneinteilung ermöglicht eine Leistungsvorgabe oder - beim Anschluß der Sensoreinrichtung 6 - eine Temperaturvorwahl. Über eine Leitung 13 ist das Induktionskochgerät 1 an eine Steckdose anschließbar.

Nach Fig. 2 und 3 weist die Sonde 7 mit Kunststoffgriff 7' ein Fühlerrohr 14 mit einem im Fühlerrohr 7 (z.B. 155 mm lang) angeordneten Widerstandsthermometer 15 und eine auf das Fühlerrohr 7 aufgesetzte Spitze 16 auf, wobei die Wärmeleitung zwischen hohler (verringerter Wärmefluß zwischen Spitze und Widerstandsthermometer) Spitze 16 und Widerstandsthermometer 15 durch zwischen der Spitze 16 und dem Widerstandsthermometer 15 angeordnetes, wärmeisolierendes Isoliermaterial 17 reduziert ist. Das Widerstandselement 15' des Widerstandsthermometers 15 wird mit Wärmeleitpaste 18 an der Rohrinnenwandung befestigt, was den Kontakt und Wärmefluß verbessert. Zu beachten ist, daß sich die eigentliche Meßstelle für die Temperatur nicht ganz vorne an der Sonde befindet, sondern im Bereich des Widerstandselementes 15'. Die spitze Form der Sonde bzw. die Spitze 16 verringert ebenfalls den Wärmefluß vom heisseren Kochgefäßboden zur Meßstelle. Es ergibt sich eine Sonde, die ein genaues Messen erlaubt und gegen Verfälschungen durch Wärmeabstrahlung des Kochgefäßrandes sicher geschützt ist.

Fig. 4 zeigt den Halter 8 mit einer Klemmeinrichtung 19 zum Anklemmen der Sonde 7 an den Kochgefäßrand 2'. Ein Hülsenabschnitt 20 dient zum Einsetzen der Meßsonde in das Kochgefäß 2. Dabei wird die Spitze bis nahe an oder auf den Boden des Kochgefässes 2 geführt, wobei die eingeschobene Sonde 7 ansonsten ringsum gegenüber der Kochgefäßwandung berührungsfrei bleibt.

## Patentansprüche

1. Induktionskochgerät für ein Kochgefäß (2) aus ferromagnetischem Material, mit einer Induktionsheizung zum Erhitzen des Kochgefässes (2) und eines im Kochgefäß (2) befindlichen Gargutes, **gekennzeichnet durch** eine Sensoreinrichtung (6) zur Ermittlung der Temperatur im Kochgefäß und/oder Gargut, und eine an die Sensoreinrichtung (86) und die Induktionsheizung angeschlossene Steuer- und Regelschaltung zur Leistungssteuerung und/oder Temperaturregelung bei einem Kochvorgang.

2. Induktionskochgerät nach Anspruch 1, **gekennzeichnet durch** ein Grundgeräteteil (3) mit der Induktionsheizung und ein auf das Grundgeräteteil (3) setzbares Aufsatzteil (4) mit einer an die Abmessungen des Kochgefässes (2) angepaßten Ausnehmung (5) zum Einsetzen des Kochgefäßes (2).

3. Induktionskochgerät nach Anspruch 1 oder 2, **dadurch gekennzeichnet, daß** die Sensoreinrichtung (6) eine Sonde (7) umfaßt.

4. Induktionskochgerät nach einem der vorstehenden Ansprüche, **dadurch gekennzeichnet, daß** die Sonde (7) ein Fühlerrohr (14) mit einem im Fühlerrohr (14) angeordneten Widerstandsthermometer (15) und eine auf das Fühlerrohr (15) aufgesetzte Spitze (16) aufweist.

5. Induktionskochgerät nach einem der vorstehenden Ansprüche, **dadurch gekennzeichnet, daß** zwischen der hohl ausgebildeten Spitze (16) und dem Widerstandsthermometer (15) ein wärmeisolierendes Material (17) vorgesehen ist.

6. Induktionskochgerät nach einem der vorstehenden Ansprüche, **dadurch gekennzeichnet, daß** die Sensoreinrichtung (6) einen Sondenhalter (8) zum Befestigen der Sonde (7) am Kochgefäß und ein an die Sonde (7) angeschlossenes Kabel (9) umfaßt.

7. Induktionskochgerät nach einem der vorstehenden Ansprüche, **dadurch gekennzeichnet, daß** der Sondenhalter (8) eine Klemmeinrichtung (19) zum Anklemmen am Kochgefäßrand (2') und einen Hülsenabschnitt (20) zum Einsetzen der Sonde (7) aufweist, welcher derart ausgelegt ist, daß die Spitze (16) bis an den Boden des Kochgefässes (2) führbar ist, wobei die eingeschobene Sonde (7) ansonsten ringsum gegenüber der Kochgefäßwandung berührungsfrei bleibt.

8. Induktionskochgerät nach einem der vorstehenden Ansprüche, **dadurch gekennzeichnet, daß** das Grundgerät eine an die Steuer- und Regelschaltung angeschlossene Bedienungseinheit (12) mit einer doppelten Skaleneinteilung zur Temperaturvorgabe bei eingesteckter Sensoreinrichtung oder Leistungsvorgabe bei ausgesteckter Sensorvorrichtung aufweist.

9. Induktionskochgerät nach einem der vorstehenden Ansprüche, **dadurch gekennzeichnet, daß** bei angeschlossener Sensoreinrichtung eine Temperaturregelung und bei nicht-angeschlossener Sensoreinrichtung eine Leistungssteuerung stattfindet.

10. Induktionskochgerät nach einem der vorstehenden Ansprüche, **dadurch gekennzeichnet, daß** die Bedienungseinheit als Drehgriff (12) oder durch eine Tastatur mit digitaler Anzeige ausgebildet ist.

11. Induktionskochgerät nach einem der vorstehenden Ansprüche, **dadurch gekennzeichnet, daß** bei der Steuer- und/oder Regelschaltung folgende Sicherheitsfunktionen als Schaltungsteil oder Unterroutine realisiert sind:
- Sondenerkennung;
- Defekterkennung der Sonde
- Kochguterkennung
- Topferkennung

12. Induktionskochgerät nach einem der vorstehenden Ansprüche, **dadurch gekennzeichnet, daß** die Sicherheitsfunktion 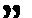 Kochguterkennung" über eine Messung der Temperatur und eine anschliessende Auswertung des Verhaltens des Temperaturgradientens erfolgt.
